# FASCICULE DE BREVET EUROPEEN

(11) **EP 3 703 965 B1**
(45) Date de publication et mention de la délivrance du brevet: **20.07.2022**
(21) Numéro de dépôt: 18811600.8
(22) Date de dépôt: 30.10.2018
(51) Int. Cl.: B60H 3/02, F24F 6/00, F24F 6/12

(54) **SYSTEME DE NEBULISATION POUR VEHICULE AUTOMOBILE ET VEHICULE AUTOMOBILE COMPRENANT UN TEL SYSTEME**
VERNEBLERSYSTEM FÜR KRAFTFAHRZEUG UND KRAFTFAHRZEUG MIT EINEM SOLCHEN SYSTEM
MOTOR VEHICLE NEBULIZER SYSTEM AND MOTOR VEHICLE COMPRISING SUCH A SYSTEM

(30) Priorité: 31.10.2017 FR 1760287
(43) Date de publication de la demande: 09.09.2020
(73) Titulaire: Valeo Systemes Thermiques, 78322 Le Mesnil Saint-Denis Cedex (FR)
(72) Inventeur: FEUILLARD, Vincent, 78322 Le Mesnil Saint-denis Cedex (FR); PETIT, Stéphane, 78322 Le Mesnil Saint-denis Cedex (FR)
(74) Mandataire: Valeo Systèmes Thermiques
(86) Numéro de dépôt international: PCT/FR2018/052698
(87) Numéro de publication internationale: WO 2019/086808

(56) Documents cités:
- WO-A1-2014/177805
- WO-A1-2018/024965
- FR-A1- 3 028 774
- FR-A1- 3 045 420
- JP-A- H03 158 634
- JP-A- S63 312 226
- JP-A- 2002 052 355
- KR-A- 20170 036 434

## Description

### Domaine de l'invention

L'invention concerne les véhicules et notamment les véhicules automobiles. L'invention concerne également les dispositifs thermiques des véhicules. Plus spécifiquement, l'invention concerne les systèmes de nébulisation de ces dispositifs thermiques.

### Arrière-plan technologique de l'invention

Un véhicule automobile comporte généralement un ou plusieurs dispositifs thermiques destinés notamment à réguler une température dans un habitacle du véhicule automobile. Par exemple, le véhicule automobile comprend un dispositif de ventilation, chauffage et/ou climatisation destiné à abaisser ou à élever la température régnant dans l'habitacle.

Le dispositif de climatisation de ventilation, chauffage et/ou climatisation comprend généralement au moins un aérateur situé sur un tableau de bord du véhicule automobile. Cet aérateur permet d'introduire, lorsque cela est nécessaire, de l'air froid dans l'habitacle. Ainsi, des passagers d'une plage arrière de l'habitacle sont situés à une distance de l'aérateur qui est plus importante que des passagers de la plage avant. C'est pourquoi, lorsque l'aérateur fournit un air froid à une température convenable pour les passagers de la plage avant, les passagers de la plage arrière peuvent ressentir une sensation de chaleur. Inversement, si le dispositif de climatisation fournit un air plus froid pour contenter les passagers de la plage arrière, les passagers de la plage avant peuvent être incommodés.

Pour réguler thermiquement l'habitacle et notamment à destination des passagers de la plage arrière, on a donc mis en place des systèmes de nébulisation. Un tel système comporte un réservoir d'eau liquide et une buse de nébulisation qui comporte un élément piézoélectrique d'émission d'ondes acoustiques et un concentrateur d'ondes acoustiques. L'élément piézoélectrique vibre de façon à émettre une onde acoustique et le concentrateur concentre cette onde. L'onde concentrée interagit avec de l'eau issue du réservoir.

Ainsi, l'eau quitte la buse de nébulisation sous la forme d'un brouillard de gouttelettes d'eau et d'un jet d'eau. Le brouillard de gouttelettes gagne l'habitacle du véhicule pour abaisser la température de l'habitacle, notamment dans une zone comprenant la plage arrière. En effet, la buse de nébulisation peut notamment être disposée à proximité d'une zone qui comprend la plage arrière. De tels systèmes de nébulisation présentent aussi l'avantage d'être plus écologiques que les systèmes de climatisation.

Cependant, ces systèmes de nébulisation sont peu ergonomiques. En effet, ils s'insèrent mal dans l'architecture du véhicule automobile. En outre, l'accès au réservoir d'eau liquide est souvent complexe. Le document WO 2014/177805 A1 divulgue un système de nébulisation d'un type connu.

### Objet de l'invention

Un but de l'invention est de fournir un système de nébulisation pour véhicule automobile qui s'intègre plus efficacement dans l'architecture du véhicule et qui soit plus facile à utiliser.

### Brève description de l'invention

Pour ce faire, on prévoit selon l'invention un système de nébulisation pour véhicule automobile, suivant les caractéristiques de la revendication 1.

Suivant l'invention, le système de nébulisation comprend:
- un premier réservoir d'eau liquide,
- un second réservoir d'eau liquide en communication hydraulique avec le premier réservoir, le second réservoir étant fixé de manière amovible au premier réservoir, et
- une buse de nébulisation, en communication hydraulique avec le premier réservoir et comportant un élément piézoélectrique d'émission d'ondes acoustiques et un concentrateur des ondes acoustiques émises par l'élément piézoélectrique configuré de sorte que l'eau issue du premier réservoir forme un jet d'eau et un brouillard de gouttelettes d'eau en sortie du concentrateur, le brouillard étant destiné à quitter la buse de nébulisation pour gagner un habitacle du véhicule automobile,
- le second réservoir et la buse de nébulisation sont disposés, en référence à une direction verticale, au dessus du premier réservoir lorsque le système est en position normale d'utilisation, de sorte que de l'eau issue de la buse de nébulisation chute dans le premier réservoir, le second réservoir comprenant un clapet anti-retour disposé dans l'entrée d'eau liquide de façon à permettre à de l'eau extérieure au système de nébulisation de gagner le second réservoir et à empêcher l'eau du second réservoir de quitter le second réservoir par l'entrée d'eau liquide, le système de nébulisation comprenant un clapet anti-retour disposé entre le premier réservoir et le second réservoir de façon à permettre à l'eau de circuler du second réservoir vers le premier réservoir mais à empêcher l'eau de circuler du premier réservoir vers le second réservoir.

Ainsi, le système de nébulisation comprend deux réservoirs fixés l'un à l'autre de manière amovible. C'est pourquoi, lorsqu'un utilisateur du système de nébulisation souhaite ajouter de l'eau liquide dans le système, il lui suffit de détacher le second réservoir du premier réservoir et de remplir le second réservoir. Ainsi, selon l'invention, le second réservoir peut avantageusement être une bouteille d'une contenance de 1,5 litre par exemple que l'utilisateur peut fréquemment remplir ce qui évite le maintien d'une eau stagnante trop longtemps. Le système de nébulisation selon l'invention est donc plus simple à maintenir. En outre, en détachant le second réservoir du premier réservoir, l'utilisateur peut facilement accéder à ces deux réservoirs afin de les nettoyer et ce notamment afin d'éviter que les réservoirs n'hébergent une concentration trop importante de bactéries. Le système de nébulisation selon l'invention est donc plus sûr.

En outre, le système de nébulisation selon l'invention est plus compact. En effet, le second réservoir est disposé à proximité du premier réservoir et la buse de nébulisation est disposée au dessus du premier réservoir. Ainsi, le système de nébulisation selon l'invention occupe approximativement un volume de forme parallélépipédique.

L'utilisation des clapets anti-retour selon l'invention améliore la fiabilité du système de nébulisation.

En outre, dans divers modes de réalisation de l'invention, on peut avoir également recours à l'une et/ou à l'autre des dispositions suivantes :
- le second réservoir et la buse sont disposés, en référence à une direction verticale, sur le premier réservoir lorsque le système est en position normale d'utilisation, le second réservoir est disposé au-dessus de la buse de nébulisation ;
- le second réservoir est disposé à côté de la buse de nébulisation ;
- selon les deux caractéristiques évoquées ci-dessus, le second réservoir est positionné de façon à ne pas noyer la buse de nébulisation ;
- le second réservoir comprend une entrée d'eau liquide qui est une entrée d'eau liquide pour le système de nébulisation ;
- le système de nébulisation comporte un conduit d'entraînement configuré pour diriger le brouillard de gouttelettes d'eau quittant la buse vers l'habitacle du véhicule automobile ;
- le conduit d'entraînement renferme la buse de nébulisation ; ainsi, la buse de nébulisation est protégée ;
- le conduit d'entraînement comprend deux portions cylindriques disposées l'une à la suite de l'autre et formant entre elles un angle aigu ;
- le conduit d'entraînement comprend deux portions cylindriques disposées l'une à la suite de l'autre et formant entre elles un angle obtus ;
- le système de nébulisation comporte un ventilateur en communication aéraulique avec le conduit d'entraînement et configuré pour émettre dans le conduit d'entraînement un flux d'air dans un sens d'émission du brouillard de gouttelettes d'eau vers l'habitacle du véhicule automobile ; le ventilateur permet de diriger avec fiabilité le brouillard de gouttelettes ;
- le conduit d'entraînement renferme le ventilateur ; ainsi, le ventilateur est protégé par le conduit d'entraînement ;
- le système de nébulisation comporte des moyens pour diriger le jet d'eau issu du
- le système de nébulisation comporte une pompe disposée entre le premier réservoir et la buse de nébulisation ;
- le système de nébulisation comporte un filtre à eau disposé entre le premier réservoir et la buse de nébulisation ;
- le premier réservoir à une forme sensiblement parallélépipédique ;
- le second réservoir a une forme sensiblement cylindrique ;
- le conduit d'entraînement a une forme sensiblement cylindrique.

On prévoit également selon l'invention un dispositif de ventilation, chauffage et/ou climatisation pour véhicule automobile, comprenant un système de nébulisation tel que décrit ci-dessus.

On prévoit en outre selon l'invention un habitacle de véhicule comprend un dispositif tel que mentionné ci-dessus.

### Brève description des dessins

On va maintenant décrire, à titre d'exemple non limitatif, un mode de réalisation de l'invention à l'aide des figures suivantes :
- la figure 1 illustre schématiquement un système de nébulisation selon l'invention vu de côté,
- la figure 2 représente schématiquement le système de nébulisation lorsqu'il n'est pas actionné et dans lequel un conduit d'entraînement et un ventilateur du système de nébulisation ne sont pas représentés, et
- la figure 3 est une vue analogue à celle de la figure 2 lorsque le système de nébulisation est actionné.

### Description détaillée d'un mode de réalisation de l'invention

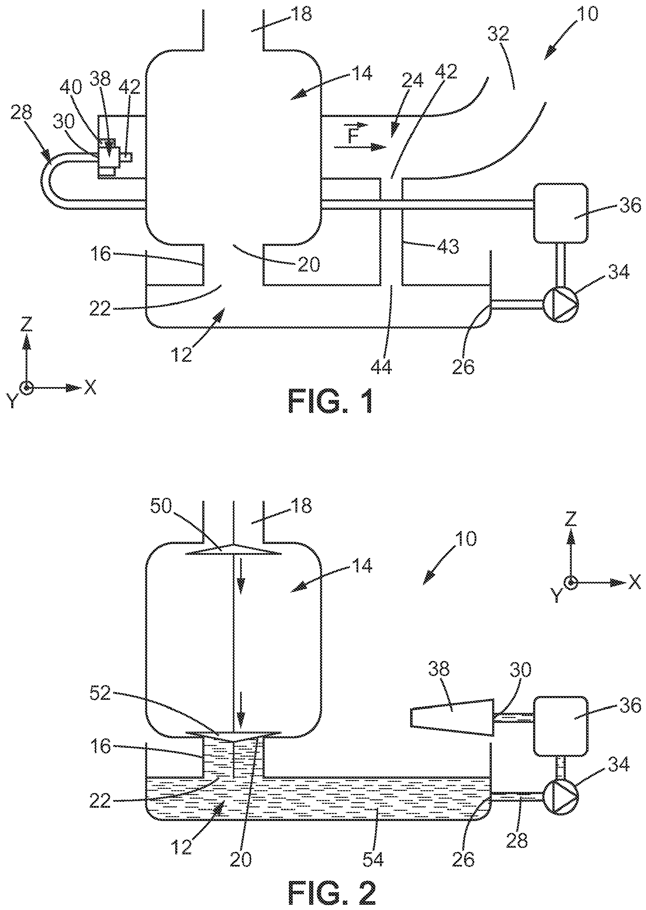

On a représenté à la figure 1 un système de nébulisation 10 selon un mode de réalisation de l'invention. Le système de nébulisation 10 fait partie d'un dispositif thermique d'un habitacle de véhicule automobile destiné à abaisser une température régnant dans l'habitacle et plus précisément dans une zone qui comprend une plage arrière de l'habitacle. On notera que selon l'invention, le dispositif de nébulisation peut être destiné à abaisser une température de toute zone de l'habitacle et notamment de l'ensemble de l'habitacle luimême. On notera par ailleurs que selon l'invention, le dispositif thermique comprenant le système de nébulisation 10 peut être disposé dans tout type de véhicule.

Comme illustré à la figure 1, le système de nébulisation 10 comporte un premier réservoir 12 et un second réservoir 14. Le premier réservoir 12 et le second réservoir 14 sont en communication hydraulique au moyen d'un conduit 16. Ainsi, le second réservoir 14 comporte une entrée 18 d'eau liquide qui forme également une entrée 18 d'eau liquide pour le système de nébulisation 10. Le second réservoir 14 comporte également une sortie 20 d'eau liquide en communication hydraulique, au moyen du conduit 16, avec une entrée 22 d'eau liquide du premier réservoir 12.

De plus, le système de nébulisation 10 comprend un conduit d'entraînement 24 en communication hydraulique avec le premier réservoir 12, au moyen d'un premier conduit 28. Ainsi, le premier réservoir 12 comporte une sortie 26 d'eau liquide en communication hydraulique, au moyen du premier conduit 28, avec une entrée 30 d'eau liquide du conduit d'entraînement 24.

Le conduit d'entraînement 24 comporte également une sortie 32 de brouillard de gouttelettes d'eau et d'air, comme il sera expliqué ci-après, qui débouche dans la zone de l'habitacle qui comprend la plage arrière. Notamment, la sortie 32 peut notamment déboucher dans une console de l'habitacle disposée entre un siège conducteur et un siège passager avant et être orientée vers la zone qui comprend la plage arrière.

En outre, le conduit d'entraînement 24 renferme une buse de nébulisation 38 et un ventilateur 40. La buse de nébulisation 38 est disposée directement sur l'entrée 30 d'eau liquide du conduit d'entraînement 24. Ainsi, la buse de nébulisation 38 est également en communication hydraulique avec le premier réservoir 12 au moyen du premier conduit 28.

La buse de nébulisation 38 comprend une sortie 42 d'eau liquide dans le conduit d'entraînement 24. Le ventilateur 40 est apte à émettre un flux d'air F, illustré sur la figure 1, dans le conduit d'entraînement 24 dans un sens qui va de l'entrée 30 d'eau liquide du conduit d'entraînement 24 vers la sortie 32 de brouillard de gouttelettes d'eau et d'air du conduit d'entraînement 24.

On notera que selon une variante du présent mode de réalisation, le conduit d'entraînement 24 ne renferme pas le ventilateur 40 mais ce dernier en communication aéraulique, par exemple au moyen d'un conduit spécifique, avec le conduit d'entraînement 24.

Par ailleurs, le conduit d'entraînement 24 est en en communication hydraulique avec le premier réservoir 12 au moyen d'un second conduit 43. Ainsi, le conduit d'entraînement 24 comporte une seconde sortie 42 d'eau liquide en communication hydraulique avec une seconde entrée 44 du premier réservoir 12. La fonction du second conduit 40 sera décrite ci-après. La seconde entrée 44 et le second conduit 43 permettent un retour de l'eau liquide dans le premier réservoir 12. En d'autres termes, la seconde entrée 44 et le second conduit 43 permet une recirculation de l'eau liquide non nébulisé.

En outre, le premier conduit 28 comprend une pompe hydraulique 34 et un filtre à eau 36. Ainsi, la pompe hydraulique 34 et le filtre à eau 36 sont disposés entre le premier réservoir 12 et la buse de nébulisation 38. La pompe hydraulique 34 a pour fonction de faire circuler de l'eau du premier réservoir 12, dans le premier conduit 28, vers la buse de nébulisation 38 située dans le conduit d'entraînement 24. Le filtre à eau 36 a pour fonction de filtrer l'eau qui circule dans le premier conduit 28.

De plus, la buse de nébulisation 38 comporte, de manière connue en soi, un élément piézoélectrique d'émission d'ondes acoustiques et un concentrateur d'ondes acoustiques émises par l'élément piézoélectrique non représentés. L'élément piézoélectrique peut notamment être un quartz. L'élément piézoélectrique vibre lorsqu'il est alimenté électriquement. Le concentrateur d'ondes acoustiques peut se présenter sous la forme d'une enceinte qui a une forme convergente depuis une entrée jusqu'à une sortie d'eau liquide de façon à focaliser, dans le jet d'eau, les ondes acoustiques émises par l'élément piézoélectrique pour améliorer le rendement en brouillard de gouttelettes d'eau.

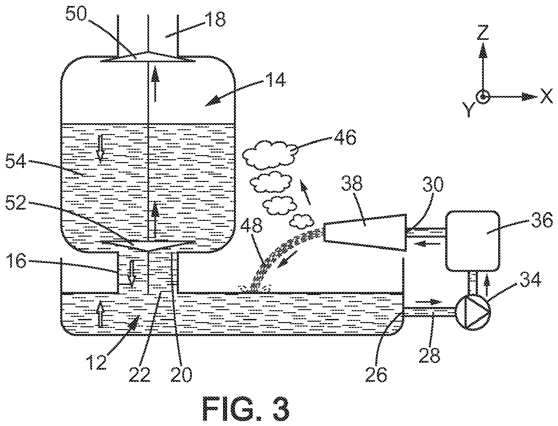

Ainsi, comme schématisé sur la figure 3, le concentrateur d'ondes acoustiques est configuré de sorte que de l'eau liquide issue du premier réservoir 12 forme, en sortie du concentrateur et lorsque l'élément piézoélectrique est actionné, un brouillard de gouttelettes d'eau 46 et un jet d'eau 48. En conséquence, le brouillard de gouttelettes d'eau 46 et le jet d'eau 48 sont émis dans le conduit d'entraînement 24. Le brouillard de gouttelettes d'eau 46 est ensuite dirigé, au moyen du flux d'air F, vers la sortie 32 du conduit d'entraînement 24 et donc vers l'habitacle du véhicule automobile. Ainsi, le conduit d'entraînement 24 est configuré pour diriger le brouillard de gouttelettes d'eau 46 quittant la buse de nébulisation 38 vers l'habitacle du véhicule automobile. Le ventilateur 40 est donc également configuré pour émettre le flux d'air F dans un sens d'émission du brouillard de gouttelettes d'eau 46 vers l'habitacle du véhicule automobile.

On notera par ailleurs que les gouttelettes d'eau 46 présentent un diamètre dépendant de la fréquence de vibration de l'élément piézoélectrique. Par exemple, le diamètre des gouttelettes 46 est inférieur à 10 µm. Le jet d'eau 48 s'écoule également dans le conduit d'entraînement 24, puis gagne le premier réservoir 12, sous l'effet de la gravité, au moyen du second conduit 43. Ainsi, au moins le second conduit 43 forme des moyens pour diriger le jet d'eau 48 issu du concentrateur vers le premier réservoir 12.

En outre, comme schématiquement illustré sur les figures 2 et 3, l'entrée 18 d'eau liquide du second réservoir 14 comporte un clapet anti-retour 50 configuré pour que de l'eau liquide extérieure au second réservoir 14 et donc au système de nébulisation 10 puisse gagner le second réservoir 14 mais pour que de l'eau liquide dans le second réservoir 14 ne puisse pas quitter le second réservoir 14 par l'entrée 18 d'eau liquide.

De même, la sortie 20 d'eau liquide du second réservoir 14 comporte un clapet anti-retour 52 configuré pour permettre à de l'eau liquide de circuler du second réservoir 14 vers le premier réservoir 12 mais pour empêcher l'eau liquide de circuler du premier réservoir 12 vers le second réservoir 14. De plus, le clapet anti-retour 52 ne laisse l'eau passer du second réservoir 14 vers le premier réservoir 12 que lorsqu'il est électriquement actionné comme il sera décrit ci-dessous.

On notera que selon des variantes du présent mode de réalisation, mais qui n'entrent pas dans le cadre de l'invention telle que revendiquée, les clapets anti-retour 50 et 52 sont remplacés par des vannes électriquement commandés. De même, l'entrée 18 d'eau liquide du second réservoir 14 peut comporter un bouchon fixé de façon amovible au second réservoir 14, par exemple au moyen d'une liaison de type vis/écrou.

En outre, le système de nébulisation 10 comporte un module de commande électronique qui dirige notamment les clapets anti-retour 50, 52, la pompe hydraulique 34, le ventilateur 40 et l'élément piézoélectrique de la buse de nébulisation 38. Ce module de commande électronique peut être automatisé ou alors être commandé par un système électronique du véhicule automobile.

On va maintenant décrire l'agencement des différentes parties du système de nébulisation 10 les unes par rapport aux autres.

Avantageusement, le premier réservoir 12 a une forme sensiblement parallélépipédique, et s'étend principalement dans un plan horizontal XY, lorsque le système de nébulisation 10 est en position normale d'utilisation. De plus, le second réservoir 14 a une forme cylindrique et s'étend longitudinalement dans une direction verticale Z. Le conduit d'entraînement 24 a aussi une forme cylindrique et s'étend longitudinalement dans une direction horizontale X. Le conduit d'entraînement 24 peut avantageusement comprendre deux portions cylindriques disposées l'une à la suite de l'autre et formant entre elles un angle aigu ou obtus et ce afin de conférer au conduit d'entraînement 24 une forme générale coudée vers le haut, en référence à la direction verticale Z, et ce afin d'éviter que des gouttes d'eau trop grosses ne gagnent l'habitacle du véhicule.

En outre, comme illustré notamment sur la figure 1, en référence à la direction verticale Z, le second réservoir 14 et le conduit d'entraînement 24, qui renferme la buse de nébulisation 38, sont disposés au dessus du premier réservoir 12. De plus, on notera que le second réservoir 14 est fixé de manière amovible au premier réservoir 12, par exemple, au moyen d'une liaison par vissage. Ainsi, un utilisateur du système de nébulisation 10 peut facilement accéder au second réservoir 14 et au premier réservoir 12 pour le nettoyer. De plus, lorsque, selon une variante du présent mode de réalisation, le second réservoir 14 ne comprend pas l'entrée 18 d'eau liquide, l'utilisateur peut remplir le second réservoir 14 au moyen de la sortie 20 d'eau liquide.

On va maintenant décrire, notamment à l'aide des figures 2 et 3, le fonctionnement du système de nébulisation 10.

Au moins le premier réservoir renferme une masse d'eau 54.

Lorsque le module de commande électronique actionne le système de nébulisation 10, la pompe hydraulique 34 est activée de façon à amener, si nécessaire, de l'eau du premier réservoir 12 vers la buse de nébulisation 38, après filtration par le filtre à eau 36 au moyen du conduit 28.

Ensuite, l'élément piézoélectrique est actionné de façon à produire une onde acoustique. Cette onde acoustique est concentrée par le concentrateur acoustique dans la buse de nébulisation 38 de façon à générer, en sortie de la buse de nébulisation 38 le brouillard de gouttelettes d'eau 46 et le jet d'eau 48. Ce brouillard de gouttelettes d'eau 46 et ce jet d'eau 48 sont ainsi émis dans le conduit d'entraînement 24.

Simultanément, le module de commande électronique actionne le ventilateur 40 de façon à générer le flux d'air F qui dirige le brouillard de gouttelettes d'eau 46 dans le conduit d'entraînement 24 jusqu'à la sortie 32 du conduit d'entraînement 24 de sorte que le brouillard de gouttelettes d'eau 46 gagne la zone de l'habitacle du véhicule automobile qui comprend la plage arrière.

Parallèlement, le flux d'air F dirige le jet d'eau 48 vers le second conduit 43 de façon à ce que le jet d'eau 48 gagne le premier réservoir 12. Ainsi, le premier réservoir 12, fixe par rapport à la buse de nébulisation 38, a pour fonction de former une cuve de récupération du jet d'eau issu de la buse de nébulisation 38. Il forme en outre un « réservoir tampon » pour la boucle de recirculation de l'eau issue de la buse de nébulisation 38. Le premier réservoir 12, est ainsi situé en-dessous de la buse de nébulisation 38, en référence à la direction verticale Z de sorte que le jet d'eau issu de la buse de nébulisation 38 chute dans le premier réservoir 12. Le premier réservoir 12 peut donc avoir une capacité minimale et ainsi être moins encombrant. Par exemple, sa capacité est inférieure à 0,5L.

En outre, dans un mode de réalisation particulier, lorsque le premier réservoir 12 ne renferme plus suffisamment d'eau pour que le système de nébulisation 10 puisse fonctionner, le module de commande électronique peut activer le clapet anti-retour 52 de sorte que de l'eau circule, par l'intermédiaire du conduit 16, du second réservoir 14 vers le premier réservoir 12.

Le second réservoir 14 est amovible par rapport au premier réservoir 12, comme expliqué précédemment. En outre, le second réservoir 14 présente une capacité plus importante et permet d'alimenter le premier réservoir 12. Il peut notamment présenter une capacité supérieure à 0,5L. De plus, dans ce mode de réalisation, le second réservoir 14 et la buse de nébulisation 38 sont disposés au même niveau, selon la direction verticale Z. Selon une autre variante, le second réservoir 14 est disposé sur la buse de nébulisation 38. De façon générale, le second réservoir 14 est agencé par rapport à la buse de nébulisation 38 de sorte que cette dernière ne soit pas noyée par le second réservoir 14.

Bien entendu, on pourra apporter à l'invention de nombreuses modifications sans sortir du cadre de celle-ci.

La buse de nébulisation 38 peut comprendre tout type de dispositif d'émission d'ondes acoustiques en lieu et place ou en sus de l'élément piézoélectrique.

Le système de nébulisation 10 peut ne pas comprendre le conduit d'entraînement 24. Dans cas, en sortie du concentrateur, le brouillard de gouttelettes d'eau 46 et le jet d'eau 48 quittent la buse de nébulisation 38 et gagnent directement l'habitacle du véhicule automobile.

Le second conduit 43 peut comporter une pompe hydraulique.

Le second réservoir 14 peut avoir tout type de forme et ce, afin d'occuper un espace laissé libre par la buse de nébulisation 38.

Un mode de réalisation non décrit propose que le second réservoir soit réalisé sous une forme démontable telle que, par exemple, une bouteille d'eau minérale.

Un autre mode de réalisation non décrit propose qu'un système de clapet (par exemple à ressort) soit assujetti au second réservoir.

## Revendications

1. Système de nébulisation (10) pour véhicule automobile, comprenant:
- un premier réservoir (12) d'eau liquide,
- un second réservoir (14) d'eau liquide en communication hydraulique avec le premier réservoir (12), le second réservoir (14) étant fixé de manière amovible au premier réservoir (12), et
- une buse de nébulisation (38), en communication hydraulique avec le premier réservoir (12) et comportant un élément piézoélectrique d'émission d'ondes acoustiques et un concentrateur des ondes acoustiques émises par l'élément piézoélectrique configuré de sorte que l'eau issue du premier réservoir (12) forme un jet d'eau (48) et un brouillard de gouttelettes d'eau (46) en sortie du concentrateur, le brouillard (46) étant destiné à quitter la buse de nébulisation (38) pour gagner un habitacle du véhicule automobile,
**caractérisé en ce que**
le second réservoir (14) et la buse de nébulisation (38) sont disposés, en référence à une direction verticale (Z), au dessus du premier réservoir (12) lorsque le système (10) est en position normale d'utilisation, de sorte que de l'eau issue de la buse de nébulisation (38) chute dans le premier réservoir (12), le second réservoir (14) comprenant un clapet anti-retour (50) disposé dans l'entrée (18) d'eau liquide de façon à permettre à de l'eau extérieure au système de nébulisation (10) de gagner le second réservoir (14) et à empêcher l'eau du second réservoir (14) de quitter le second réservoir (14) par l'entrée (18) d'eau liquide, le système de nébulisation (10) comprenant un clapet anti-retour (52) disposé entre le premier réservoir (12) et le second réservoir (14) de façon à permettre à l'eau de circuler du second réservoir (14) vers le premier réservoir (12) mais à empêcher l'eau de circuler du premier réservoir (12) vers le second réservoir (14).

2. Système de nébulisation (10) selon la revendication précédente, dans lequel le second réservoir (14) est disposé au-dessus, en référence à la direction verticale (Z), de la buse de nébulisation (38).

3. Système de nébulisation (10) selon la revendication précédente, dans lequel le second réservoir (14) comprend une entrée (18) d'eau liquide qui est une entrée (18) d'eau liquide pour le système de nébulisation (10).

4. Système de nébulisation (10) selon l'une quelconque des revendications précédentes, comportant un conduit d'entraînement (24) configuré pour diriger le brouillard de gouttelettes d'eau (46) quittant la buse (38) vers l'habitacle du véhicule automobile.

5. Système de nébulisation (10) selon la revendication précédente, comportant un ventilateur (40) en communication aéraulique avec le conduit d'entraînement (24) et configuré pour émettre dans le conduit d'entraînement (24) un flux d'air (F) dans un sens d'émission du brouillard de gouttelettes d'eau (46) vers l'habitacle du véhicule automobile.

6. Système de nébulisation (10) selon l'une quelconque des revendications précédentes, comportant des moyens (43) pour diriger le jet d'eau (48) issu du concentrateur vers le premier réservoir (12).

7. Système de nébulisation (10) selon l'une quelconque des revendications précédentes, comportant un filtre à eau (36) disposé entre le premier réservoir (12) et la buse de nébulisation (38).

8. Dispositif de ventilation, chauffage et/ou climatisation pour véhicule automobile, comprenant un système de nébulisation (10) selon l'une quelconque des revendications précédentes.

## Patentansprüche

1. Zerstäubungsystem (10) für ein Kraftfahrzeug, umfassend:
- einen ersten Vorratsbehälter (12) für flüssiges Wasser,
- einen zweiten Vorratsbehälter (14) für flüssiges Wasser, der mit dem ersten Vorratsbehälter (12) in hydraulischer Verbindung steht, wobei der zweite Vorratsbehälter (14) abnehmbar am ersten Vorratsbehälter (12) befestigt ist, und
- eine Zerstäubungsdüse (38), die mit dem ersten Vorratsbehälter (12) in hydraulischer Verbindung steht und ein piezoelektrisches Element zur Aussendung von Schallwellen und einen Konzentrator der Schallwellen aufweist, die vom piezoelektrischen Element ausgesendet werden, der so ausgebildet ist, dass das Wasser aus dem ersten Vorratsbehälter (12) einen Wasserstrahl (48) und einen Nebel aus Wassertröpfchen (46) am Austritt des Konzentrators bildet, wobei der Nebel (46) dazu bestimmt ist, die Düse (38) zu verlassen, um einen Insassenraum des Kraftfahrzeugs zu erreichen,
**dadurch gekennzeichnet, dass** der zweite Vorratsbehälter (14) und die Zerstäubungsdüse (38) in Bezug auf eine vertikale Richtung (Z) über dem ersten Vorratsbehälter (12) angeordnet sind, wenn sich das System (10) in der normalen Gebrauchsposition befindet, so dass das Wasser aus der Zerstäubungsdüse (38) in den ersten Vorratsbehälter (12) fällt, wobei der zweite Vorratsbehälter (14) eine Rückströmsperre (50) umfasst, die im Einlass (18) für flüssiges Wasser so angeordnet ist, dass Wasser außerhalb des Zerstäubungsystems (10) den zweiten Vorratsbehälter (14) erreichen kann und das Wasser aus dem zweiten Vorratsbehälter (14) nicht durch den Einlass (18) für flüssiges Wasser den zweiten Vorratsbehälter (14) verlassen kann, wobei das Zerstäubungsystem (10) eine Rückströmsperre (52) umfasst, die zwischen dem ersten Vorratsbehälter (12) und dem zweiten Vorratsbehälter (14) so angeordnet ist, dass das Wasser vom zweiten Vorratsbehälter (14) zum ersten Vorratsbehälter (12) strömen kann, jedoch das Wasser nicht vom ersten Vorratsbehälter (12) zum zweiten Vorratsbehälter (14) strömen kann.

2. Zerstäubungsystem (10) nach dem vorhergehenden Anspruch, wobei der zweite Vorratsbehälter (14) in Bezug auf die vertikale Richtung (Z) über der Zerstäubungsdüse (38) angeordnet ist.

3. Zerstäubungsystem (10) nach dem vorhergehenden Anspruch, wobei der zweite Vorratsbehälter (14) einen Einlass (18) für flüssiges Wasser umfasst, der ein Einlass (18) für flüssiges Wasser für das Zerstäubungsystem (10) ist.

4. Zerstäubungsystem (10) nach einem der vorhergehenden Ansprüche, aufweisend eine Mitnahmeleitung (24), die dazu ausgebildet ist, den Nebel aus Wassertröpfchen (46), der die Düse (38) verlässt, zum Insassenraum des Kraftfahrzeugs zu leiten.

5. Zerstäubungsystem (10) nach dem vorhergehenden Anspruch, aufweisend einen Ventilator (40), der mit der Mitnahmeleitung (24) in Luftverbindung steht und dazu ausgebildet ist, in die Mitnahmeleitung (24) einen Luftstrom (F) in einer Abgaberichtung des Nebels aus Wassertröpfchen (46) zum Insassenraum des Kraftfahrzeugs abzugeben.

6. Zerstäubungsystem (10) nach einem der vorhergehenden Ansprüche, aufweisend Mittel (43) zum Leiten des Wasserstrahls (48) aus dem Konzentrator zum ersten Vorratsbehälter (12).

7. Zerstäubungsystem (10) nach einem der vorhergehenden Ansprüche, aufweisend einen Wasserfilter (36), der zwischen dem ersten Vorratsbehälter (12) und der Zerstäubungsdüse (38) angeordnet ist.

8. Belüftungs-, Heizungs- und/oder Klimasteuerungsvorrichtung für ein Kraftfahrzeug, umfassend ein Zerstäubungsystem (10) nach einem der vorhergehenden Ansprüche.

## Claims

1. Nebulizing system (10) for a motor vehicle, comprising:
- a first reservoir (12) of liquid water,
- a second reservoir (14) of liquid water in hydraulic communication with the first reservoir (12), the second reservoir (14) being removably fixed to the first reservoir (12), and
- a nebulizing nozzle (38), in hydraulic communication with the first reservoir (12) and including a piezoelectric element for emitting acoustic waves and a concentrator for the acoustic waves emitted by the piezoelectric element configured so that the water coming from the first reservoir (12) forms a water jet (48) and a water droplet mist (46) at the outlet of the concentrator, the mist (46) being capable of leaving the nebulizing nozzle (38) in order to reach a passenger compartment of the motor vehicle,
**characterized in that**
the second reservoir (14) and the nebulizing nozzle (38) are arranged, with reference to a vertical direction (Z), above the first reservoir (12) when the system (10) is in the normal position of use, so that the water coming from the nebulizing nozzle (38) falls into the first reservoir (12), the second reservoir (14) comprising a non-return valve (50) arranged in the liquid water intake (18) so as to enable water from outside the nebulizing system (10) to reach the second reservoir (14) and to prevent the water from the second reservoir (14) from leaving the second reservoir (14) through the liquid water intake (18), the nebulizing system (10) comprising a non-return valve (52) arranged between the first reservoir (12) and the second reservoir (14) so as to enable the water to circulate from the second reservoir (14) to the first reservoir (12) but prevent the water from circulating from the first reservoir (12) to the second reservoir (14).

2. Nebulizing system (10) according to the previous claim, in which the second reservoir (14) is arranged above the nebulizing nozzle (38) with reference to the vertical direction (Z).

3. Nebulizing system (10) according to the previous claim, in which the second reservoir (14) includes a liquid water intake (18) that is a liquid water intake (18) for the nebulizing system (10).

4. Nebulizing system (10) according to any one of the previous claims, including a conveying duct (24) configured to direct the water droplet mist (46) leaving the nozzle (38) toward the passenger compartment of the motor vehicle.

5. Nebulizing system (10) according to the previous claim, including a fan (40) in aeraulic communication with the conveying duct (24) and configured to discharge into the conveying duct (24) a stream of air (F) in a direction of discharge of the water droplet mist (46) toward the passenger compartment of the motor vehicle.

6. Nebulizing system (10) according to any one of the previous claims, including means (43) for directing the water jet (48) coming from the concentrator toward the first reservoir (12).

7. Nebulizing system (10) according to any one of the previous claims, including a water filter (36) arranged between the first reservoir (12) and the nebulizing nozzle (38).

8. Ventilation, heating and/or air conditioning device for a motor vehicle, comprising a nebulizing system (10) according to any one of the previous claims.
